# EUROPEAN PATENT SPECIFICATION

(11) **EP 0 405 466 B1**
(45) Date of publication and mention of the grant of the patent: **18.01.1995**
(21) Application number: 90112161.6
(22) Date of filing: 26.06.1990
(51) Int. Cl.: B65H 3/06, B65H 5/00

(54) **Single sheet picking and transport mechanism**
Einzelblattaufnahme- und -transporteinrichtung
Mécanisme pour prélever et transporter des feuilles individuelles

(30) Priority: 30.06.1989 US 374256
(43) Date of publication of application: 02.01.1991
(73) Proprietor: National Computer Systems, Inc., Eden Prairie Minnesota 55344 (US)
(72) Inventor: Gysling, Walter, Excelsior, MN 55331 (US)
(74) Representative: Strehl Schübel-Hopf Groening & Partner

(56) References cited:
- CH-A- 515 126
- DE-A- 2 545 820
- DE-A- 2 940 631
- DE-B- 2 305 709
- DE-B- 2 305 709
- FR-A- 2 424 212
- US-A- 4 378 109

## Description

The present invention relates to an apparatus for removing a single sheet from the top of a stack of sheets and transporting it laterally in the direction of a processing station.

The use of rotating friction rollers or belts to "pick", that is to engage and remove laterally, the top sheet in a stack of sheets is known. A common problem with such mechanisms is that they do not always successfully pick a single sheet from the top of the stack, because the sheet below the top sheet tends to adhere to the lower surface of the top sheet and to follow the top sheet as it moves. In some circumstances, more than one sheet will follow the top sheet. If more than one sheet is removed from the stack, this can cause severe problems, particularly in machines that scan information contained on both sides of a sheet, e.g., a two-sided, optically scanned answer form. In higher speed machines that handle hundreds or thousands of documents in sheet form per hour, even occasional malfunctions of the sheet picking mechanism can lead to numerous errors or cause significant losses in throughput. Ordinarily, to avoid errors, immediate multiple-sheet detection must occur and operator intervention will be needed to remove multiple-picked documents and restore them to the document stack. If multiple-picked documents are not recognized, jams and/or misreading of documents can occur. The greater the picking and processing speed of the equipment, the greater the throughput loss when an operator must intervene.

Detection of multiple-picked sheets and mechanisms to correct multiple picking, such as reverse or stripping rollers, are known in the prior art. But such mechanisms are complex, less than perfectly reliable and only useful to correct the problem of a multiple pick once it has occurred. The present invention recognizes that it is preferable to avoid multiple picking in the first place. Accordingly, it focusses on correcting the reasons why multiple picking occurs in conventional picking mechanism designs and proposes a novel picking mechanism that is intended to significantly reduce the likelihood of multiple sheet picks.

DE 23 05 709 discloses a prior art sheet picking mechanism wherein the pick belt rests on the top of the sheet stack with the top sheet in a tangent position relative to a curved surface of a pick roller or belt. To obtain adequate frictional force to draw the top sheet from the stack, the pick roller or belt exerts a normal force on the top sheet (perpendicular to the plane of the sheet), which is transmitted down through other sheets. Due to the resilience and flexibility of stacks of paper and the friction surface of the pick roller or belt, this normal force spreads to form a compression area around the line along which the pick roller or belt contacts the top sheet in a tangent relationship. This spreading creates an area of friction force between the top sheet and the sheet next below. Similar between-sheet forces extend further into the stack, lessening with distance from the top sheet. It is this between-sheet frictional force area that causes sheets below the top sheet to tend to follow the top sheet when it is drawn laterally from the sheet stack.

It is an objective of the present invention to provide an improved sheet picking mechanism that can reliably pick a single sheet from the top of a sheet stack without drawing along with it any adjacent sheet, can remove the picked sheet from the sheet stack and transport it towards the processing station and which reliably avoids multiple picks.

### SUMMARY OF THE INVENTION

In the present invention the picking means is placed so that the frictional forces between the top sheet and the sheet next below (as well as between other adjacent sheets in the stack) are reduced. This is accomplished by avoiding a compression area relationship between the surface of the pick means and the top of the sheet stack. In particular, the pick means is placed so that it exerts a normal force only at one edge of the sheet stack from which sheets are to be picked and so that it introduces a force component that acts against the direction in which the sheet next to the top will move if a multiple pick occurs.

The present invention relates to an apparatus for removing a sheet from the top of a stack of sheets and transporting it laterally in the direction of a processing station. The apparatus comprises a pick means having an arcuate contact surface for frictionally engaging an exposed edge of the top sheet in a stack and transporting that sheet laterally at a small downward angle relative to the plane of the top of the stack. The arcuate contact surface contacts the exposed edge so that portions of the arcuate contact surface adjacent the edge extend both above and below the plane of the top of the stack. Dam means is located adjacent but spaced from the arcuate contact surface and below the plane of the top of the stack for slidingly engaging the edge of a picked sheet and the sheet surface opposite the surface engaged by the arcuate contact surface, to guide the sheet edge toward the arcuate contact surface. Retard means are mounted downstream from the dam means so as to receive the edge of sheets guided by the dam means and pinch the sheets between the retard means and the arcuate contact surface.

Further embodiments and advantages of the invention will become clear in the following detailed discussion of the preferred embodiment of the invention, including the following drawings.

### BRIEF DESCRIPTION OF THE DRAWINGS

Fig. 1 is a simplified mechanical diagram of the pick mechanism;
Fig. 2 is a simplified mechanical force diagram of the pick mechanism, with vectors included;
Fig. 3 (a multiple sheet figure) is a side elevational view of the pick mechanism with the surrounding paper handling mechanism assembly;
Fig. 4 (a multiple sheet figure) is a top plan view of the pick mechanism and assembly of Fig. 3 with a portion of the paper stack table cut away;
Fig. 5 is a fragmentary top plan view of the angled roller paper transport assembly located beneath the thickness sensor;
Fig. 6 is a fragmentary top plan view of the angled roller paper transport assembly located after the optical paper reading mechanism and before discharge;
Fig. 7 is a slightly enlarged, side elevational, fragmentary view of the thickness sensor assembly;
Fig. 8 is a fragmentary front elevational view of the assembly of Fig. 7;
Fig. 9 is a top plan view of the assembly of Fig. 7; and
Fig. 10 is a schematic diagram showing the relationship taught by the prior art between picking rollers or belts and the stacks on which they operate.
Fig. 11 is a block diagram showing the connections between various components of the control system for the present invention.

### DESCRIPTION OF THE PREFERRED EMBODIMENT

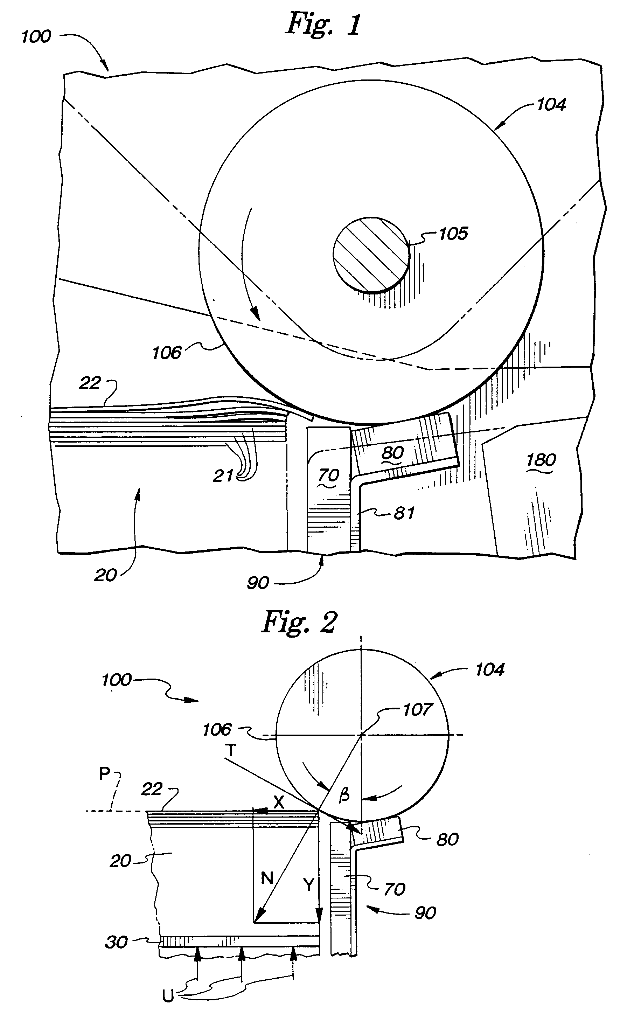

As seen generally in Figs. 1, 3a-3c and 4a-4c, the invention involves a sheet picking mechanism 100 that is part of an apparatus that removes documents in sheet form from a paper stack 20 (top sheet 22 first, followed by lower sheets 21) to deliver them for transport through a processing station 200, such as an optical reader, that requires presentation of a single sheet in precise alignment. A processed sheet is further transported to an optional printing station 250 and then to a discharge hopper 270.

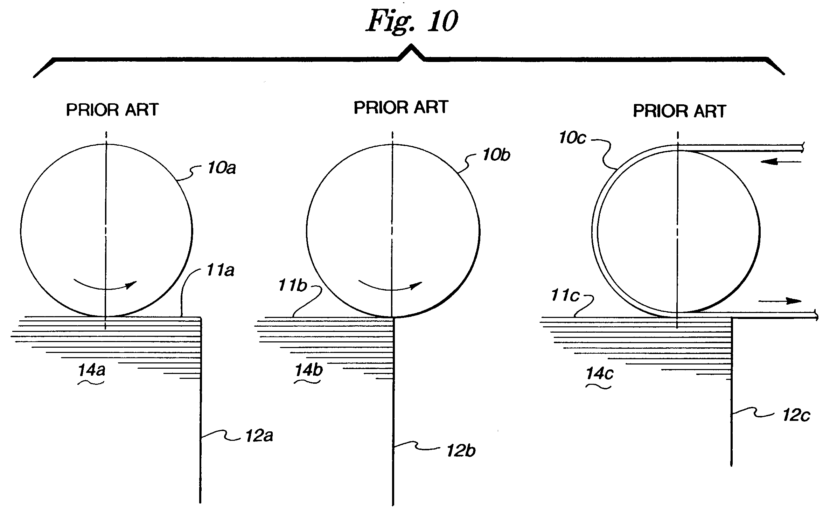

As shown in Figure 10, in prior art sheet picking mechanisms a roller 10a, 10b or belt 10c is conventionally used to engage the top sheet 11a, 11b or 11c in a stack 14a, 14b or 14c of sheets. The roller 10a, 10b or belt 10c has a high friction surface and its motion (as shown by arrows) draws the top sheet 11a, 11b or 11c off the top of the stack 14a, 14b or 14c. To obtain the desired frictional force, the roller 10a, 10b or belt 10c must exert a normal (vertical to the surface of sheet 11a, 11b or 11c) force on the sheet stack 12a, 12b or 12c. In the prior art the roller 10a, 10b or belt 10c has an arcuate surface that engages the surface of sheet 11a, 11b or 11c along a line of tangent contact or, in the case of belt 11c, a line of tangent contact and an adjacent area. The normal force is strongest at the line of tangency. Due to the flexibility and resilience of the paper and the surface of roller 10a, 10b or belt 10c, the force spreads into an area adjacent the line of tangency and down into the stack. In this region the top sheet 11a, 11b or 11c and the sheet next below it engage each other with frictional force and a similar relationship exists between other adjacent sheets, with decreased frictional force with greater distance from the line of tangency. It is this frictional force between adjacent sheets (which may be enhanced by the presence of stray moisture, glue, etc.) that causes the sheet (or sheets) below the top sheet to follow the top sheet when it is removed laterally. The frictional force tending to draw sheets below the top sheet along with the top sheet can be of such magnitude that separating the sheets becomes very difficult. The problem can become aggravated when the roller 10a, 10b or belt 10c, because of its location and position relative to a separator mechanism, continues to feed multiple sheets into the separator while it attempts separation.

As best seen in the force diagram of Fig. 2, the present invention teaches a different relationship between the pick roller 104 and the sheet stack 20 that changes the forces exerted between sheets. In accordance with the present invention, the pick roller 104 frictionally engages an exposed edge of the top sheet 22 of a sheet stack 20 with a static force having a first, downward component (vector Y) and a second, lateral component (vector X), together forming a resultant force (vector N) that extends radially outward from the rotational axis of pick roller 104. This force is perpendicular to the dynamic force in a direction tangent to the arcuate surface of the pick roller 104 (vector T) that is exerted on the top sheet 22 when the pick roller 104 rotates counterclockwise. It should be noted that the upward force (vector U) exerted by the table 30 balances the downwardly directed force components.

The resultant force (vector N) forms an acute angle beta (β) (between about 15 and 45 degrees, preferably between 15 and 30 degrees) with the first, downward force component (vector Y), which is perpendicular to the top of the sheet stack 20 and parallel to the aligned edges of sheets in the sheet stack 20. As can be seen, the rotational axis 107 of pick roller 104 is oriented generally parallel to a picking plane P, defined as the plane of the top sheet in the sheet stack 20. This rotational axis 107 is also positioned above and spaced to the right of the plane of the aligned edges of the sheets (along vector Y) in the sheet stack 20. This positioning causes a portion of the arcuate contact surface 106 of the pick roller 104 to lie below the picking plane P while the remainder of the arcuate contact surface 106 lies above the picking plane P. Portions of the arcuate contact surface 106 on opposite sides of the line of contact between the pick roller 104 and the edge of the top sheet 22 lie above and below the picking plane P. As will be explained in greater detail below, a dam means 70 and retard means 80 located adjacent the pick roller 104 ("downstream" in terms of sheet motion) and just below the picking plane P aid in reducing the likelihood of a multiple sheet pick.

As best seen in Fig. 1, the edge of top sheet 22 is driven downward at a slight angle to follow the arcuate surface 106. The second, lateral force component causes the top sheet 22 as well as those immediately below it to bow upwardly. This also helps to reduce the friction between adjacent sheets. In fact, the sheet next below 22 is subject to a force that directly opposes the friction force tending to make it follow the sheet 22.

Although retard means 80 is provided, it should be emphasized that the first and primary aspect of the present invention that is designed to prevent multiple sheet picks is the configuration and position of the pick roller 104 relative to the top sheet 22. To summarize, the invention provides three features to avoid multiple sheet picking:
1. The top sheet 22 exerts far less frictional force on the sheet 21 next below, because it contacts the sheet 21 next below only along a line, not an area as in the prior art. (Reduction of frictional force).
2. The sheets 21 under the top sheet 22 experience a rearward force (i.e., a force opposing the frictional force tending to draw them along with the top sheet 22; see Fig. 2, vector X) that virtually cancels the forward frictional force exerted by the top sheet 22 when picking occurs. The net forward force on the next-to-the-top sheet approaches zero. (Counter-action of frictional force).
3. The small residual forward forces tending to cause a multiple sheet feed to advance are stopped by the retard means 80. (Back-up defense).

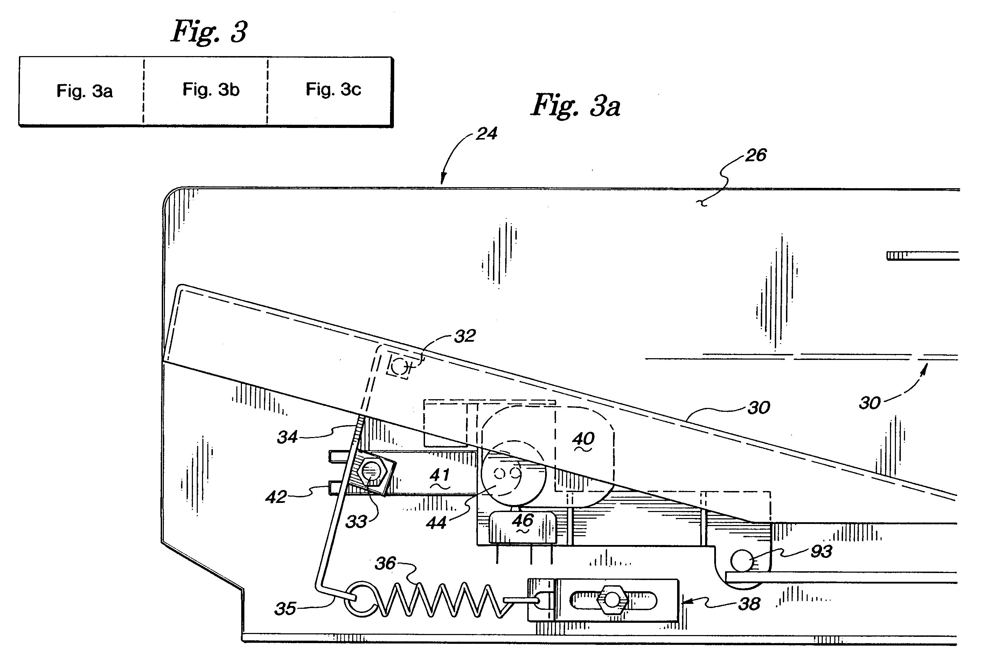

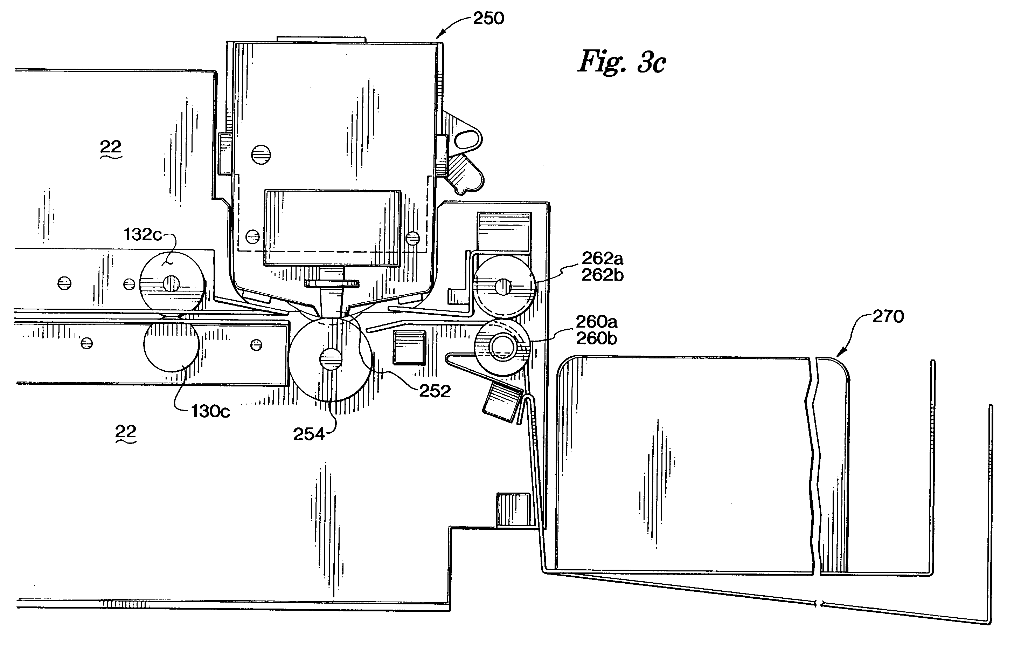

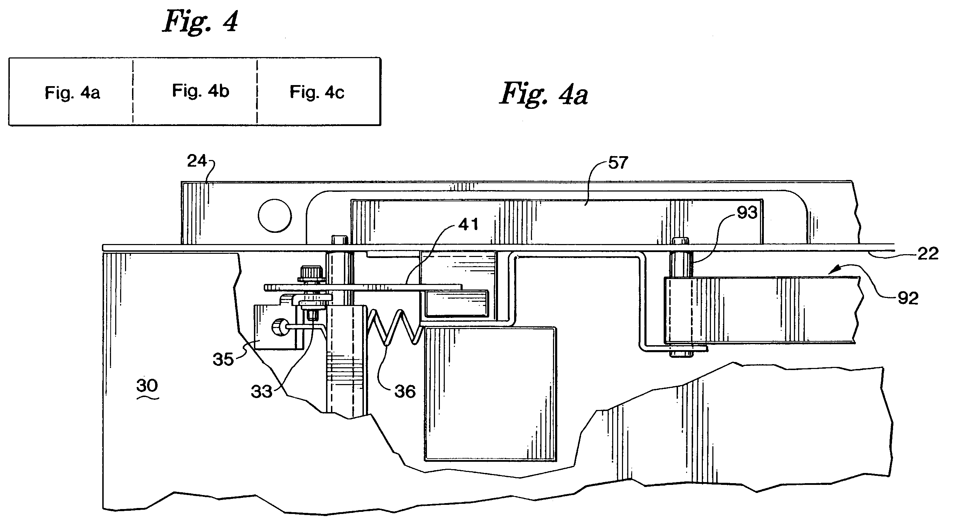

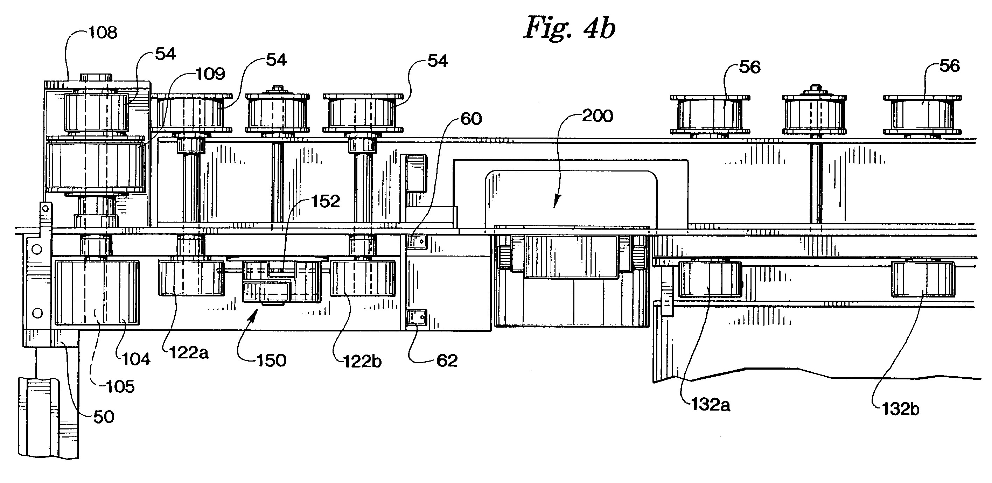

Returning now also to Figs. 3a-3c and 4a-4c, the preferred embodiment of the invention is part of a machine for processing sheet documents by optical scanning. The sheet stack 20 rests on a table 30 that turns on a pivot axis 32. This permits the end of the table 30 nearest the picking mechanism 100 to be lifted or lowered relative to the pick roller 104. The pivot axis 32 is generally horizontal and is mounted on a frame 24 that extends the length of the sheet transport path and includes a generally vertical wall 26 on which most components are mounted. The force for pivoting the table 30 is applied by tension spring 36 anchored at one end in a tension adjustment bracket 38 and at the other end in a tag 35 at the end of pivot arm 34. The arm 34 has a bracket-mounted stud 33 near its center that rides between the tines of a fork 42. The lever arm 41 of the fork 42 is connected to a crank 44 on a gear motor 40, cooperating with a pair of limit switches 46, each of which allows the crank 44 to turn 180 degrees in one direction before switching the gear motor off. One switch senses the "down" position of the table 30; the other senses the table "up" position and its state can be used to check "ready for feed" status. When the crank 44 turns 180 degrees, the fork 42 is retracted and tension spring 36 can raise the end of the table 30 opposite the pivot axis 32 towards the pick roller 104. The tension spring 36 is selected so that whatever the angle of the table 30, the sheet stack 20 exerts a constant upward force of about 250 grams against the pick roller 104. A leaf spring 50 that contacts table 30 when it is empty serves as an empty stack sensor 52 by completing an electrical circuit. As table 30 rotates, the edges of sheets in the stack 20 travel along edge guide wall 39. A display 57 using LED or other similar alphanumeric display means is located above the table 30 on the opposite side of the frame 24 for displaying various system status messages.

The pick mechanism (or pick means) 100 comprises the pick roller 104 mounted for rotation on axle 105. The surface 106 of the pick roller 104 is arcuate, preferably cylindrical. The pick roller 104 and axle 105 are mounted on a bracket 108 that positions roller 104 relative to the sheet stack 20 in the manner described above and as shown in greater detail in Figs. 1, 2. A drive belt (not shown) that travels from a drive motor 18 along a sequence of driven rollers 54, 56 (with associated idler rollers) mounted for rotation on the side of wall 26 opposite the table 30 provides rotational motion to the pick roller 104 via a spring clutch 109 that is used to selectively apply the driving force.

Just below the pick roller 104 is a guide and retard assembly 90, including dam means 70 and retard means (friction pad) 80, both of which are on an L-shaped arm 92 that pivots on a pin 93. A bracket 81 holds retard means 80. Downward motion of the arm 92 is limited by adjustable stop 94. Upward force of the guide and retard assembly 90 is provided by a tension spring 96 connected between adjustment arm 97 and anchor post 93.

The dam means 70 offers a smooth, low friction surface that slidably receives the edges of laterally and downwardly directed sheets 22, 21 from the sheet stack 20. The surface of dam means 70 is located parallel to and just below the picking plane P and also just below the pick roller 104. The dam means 70 takes a sheet 22 that is being driven downward at a slight angle by the arcuate contact surface 106 of the pick roller 104 and guides it toward the retard means 80.

Retard means 80 is angled upward to the right (as viewed in Fig. 1) at about ten degrees relative to the picking plane P. It is also positioned so that it has a tangent relationship with the arcuate contact surface 106. That is, dam means 70 guides a sheet 22 into a tapered retard gap where the sheet 22 is pinched between the static surface of retard means 80 and the moving surface of pick roller 104. To permit the retard means 80 to exert meaningful retarding friction force on a sheet that erroneously accompanies the top sheet 22 in a multiple pick, the retard means 80 has a friction surface; however, to permit a single top sheet 22 to pass without undue resistance, the coefficient of friction of the retard means 80 is significantly lower than that of the arcuate contact surface 106. It is high enough, however, to retard an extra sheet 21 traveling along with top sheet 22 in most cases. When only a single sheet is present, the primary function of the retard means 80 is to press the sheet against the pick roller 104 to supplement the frictional transport force generated at the contact line between arcuate contact surface 106 and the sheet stack 20.

The force that the retard means 80 exerts at the retard gap is about 140 grams as determined by the tension spring 96. Because the guide and retard assembly 90 can be driven downward by the impact of successive sheet picks, particularly of sheets of stiffer material, and by picking at high speeds, the stop 94 limits downward travel to keep both in operating position.

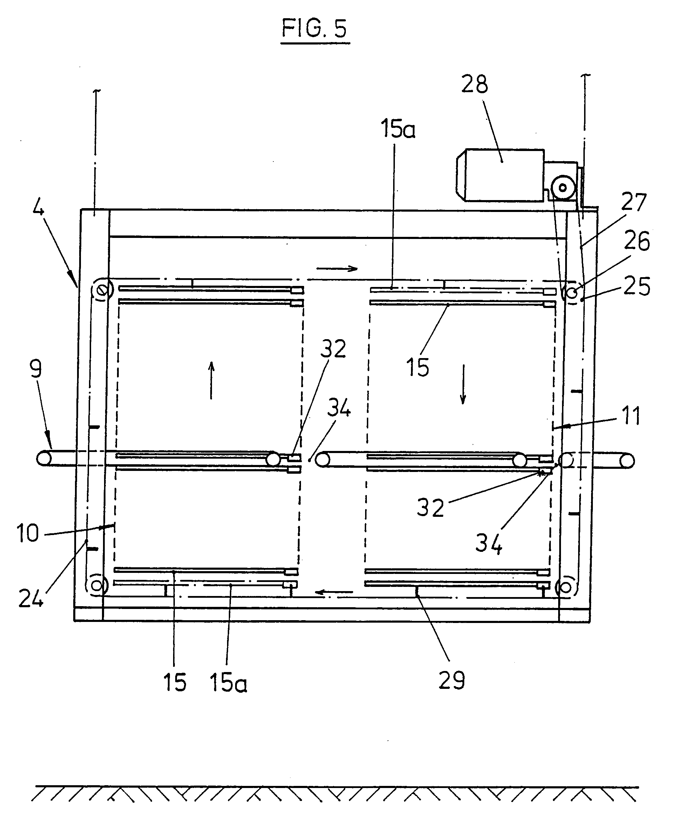

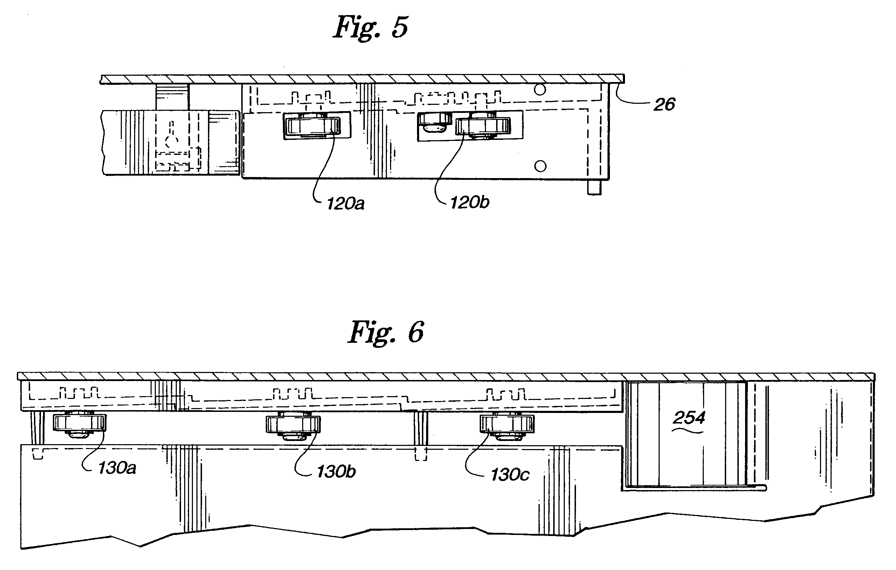

Transport of a sheet 22 that is picked and driven past the retard means 80 is accomplished by driven wheels 122a, 122b above the sheet path, with corresponding idler wheels 120a, 120b, respectively, below the sheet path. As can be seen in Fig. 5, the rollers 120a, 120b are angled slightly toward the wall 26 (about 1.5 degrees) to aid in correcting skewing of a sheet 22. The wall 26 serves as a reference surface for sheet alignment, and the angled rollers 120a, 120b force sheets against the wall 26.

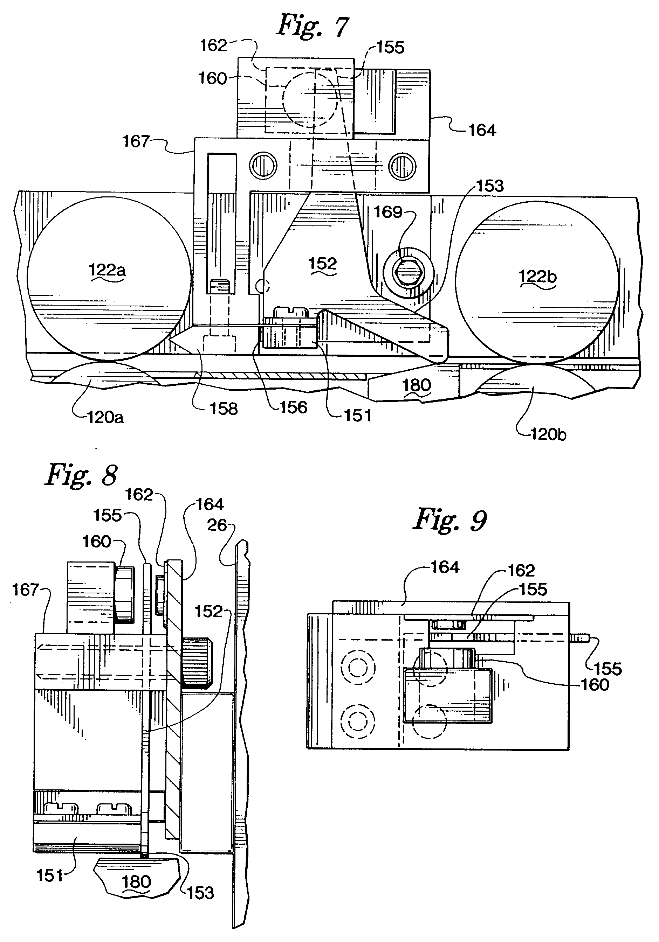

Between the roller pair 120a, 122a and 120b, 122b is located a sheet thickness sensor assembly 160. As best seen in Figs. 7-9, thickness is measured in a measuring gap between ramped base surface 180 and sensor finger 153 of sensor arm 152. Sensor arm 152 is mounted on an arm clamp assembly 151 that also holds a flex hinge 156 in the form of a leaf spring, whose opposite end is held in hinge clamp 158. This hinge arrangement permits finger 153 to be displaced upward by rotation of arm 152 in a plane perpendicular to the plane of a sheet 22 that is in the measuring gap. Motion of the arm 152 in other directions is severely limited to permit arm 152 to respond precisely to sheet thicknesses in the range from 0.0035 inches to 0.010 inches.

Above the arm clamp assembly 151 is a sensor mounting frame 167 housing a magnet 160 facing a Hall effect sensor chip 162. The frame 167 is, in turn, mounted on a mounting plate 164 attached to the wall 26 by fastener 169. The sensor chip 162 is fastened to the mounting plate 164 opposite the magnet 160 so as to form a gap between them. Interposer blade tip 155 of arm 152 is located and moves within the gap between the Hall effect sensor chip 162 and the corresponding magnet 160. When the blade tip 155 occludes various portions of the magnetic field in this gap, the output voltage from the Hall effect sensor chip 162 corresponds to the amount of displacement of sensor finger 153. If the sheet thickness sensed exceeds predefined limits, then a multiple sheet pick is indicated. An error is signaled and rotation of the pick roller 104 and transport rollers 122a, 122b is inhibited.

When the leading edge of a sheet 22 has passed through the thickness sensor assembly 150, it reaches rollers 122a, 122b and is driven into the sensing region of skew sensors 60, 62. Together these photosensors 60, 62 sense whether a transported sheet is present and aligned along the reference surface of wall 26 or is skewed away from it. Excessive skew sensed by sensor 60 leads to an error condition. If neither sensor 60, 62 senses a sheet when expected, then a jam may be present and a different error condition is registered.

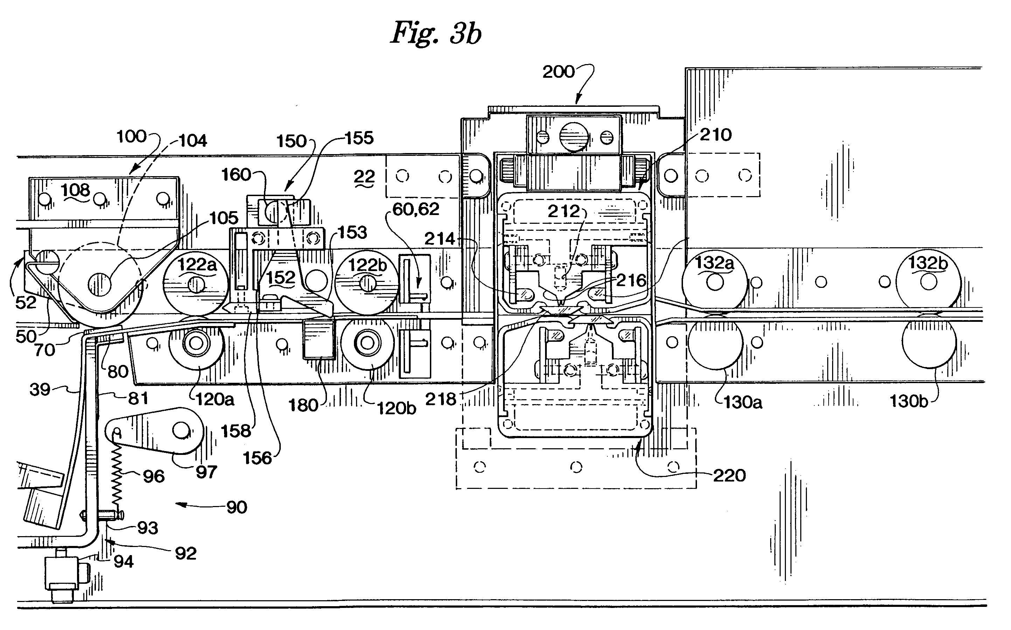

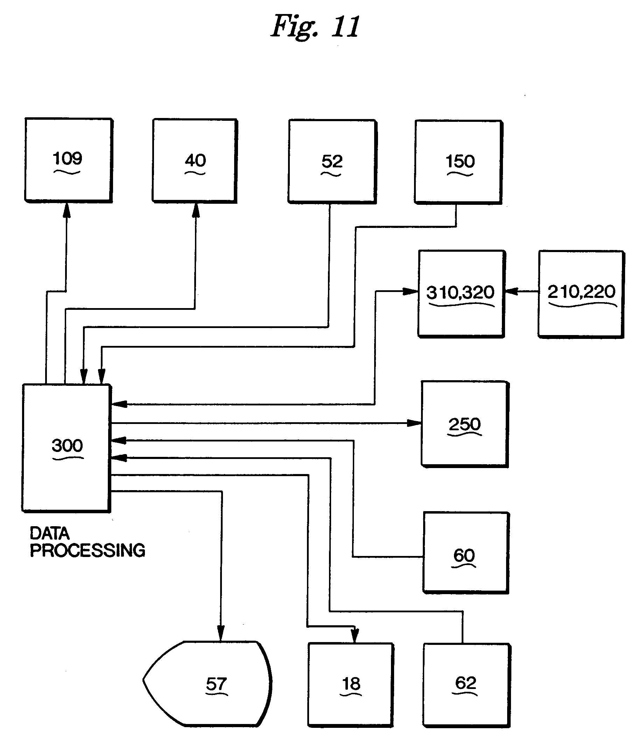

If the skew sensors 60, 62 are passed without error, then the sheet 22 proceeds to the processing station 200 where optical reading occurs. As best seen in Fig. 3b, the processing station preferably uses reflective reading techniques to sense markings on either side of a sheet; accordingly, it has an upper optical reading assembly 210 and a lower optical reading assembly 220. Each of these is based on conventional designs and includes a pair of light sources 214, each projecting light onto a mirrored surface 216 on one side of a housing for a photocell 212. The photocell 212 senses reflected light or darkness according to images transmitted from a sheet up through protective lens 218. Lower optical reader assembly 220 is identical but inverted and offset so that the upper surface and lower surface reading fields are separate. In the preferred embodiment each upper and lower optical reading assembly 210, 220 has an associated data processing means 310, 320, respectively, for control and sensor output handling purposes (see Fig. 11).

After passing through the processing station 200, a scanned sheet is picked up by driver rollers 132a, 132b, 132c above the sheet path and their corresponding idler rollers 130a, 130b, 130c below the sheet path. As seen in Fig. 6, the rollers 130a, 130b, 130c are angled slightly to aid in holding the sheet 22 against the reference surface formed by wall 26. To help hold a sheet 22 taut and flat during optical scanning the drive pulleys 56 for rollers 132a, 132c have fewer teeth than the drive pulleys 54 so that rollers 13a, 132c are driven slightly faster than the rollers 122a, 122b.

After leaving the roller pair 130c, 132c the sheet 22 enters the print station 250 where an optional print head 252 opposed by a print roller 254 is used to print a score or any other desired information on the sheet 22. After exiting from the print station 250, the sheet 22 is grasped by a pair of driven upper discharge rollers 262a, 262b, and corresponding idler rollers 260a, 260b. These rollers drive the sheet into discharge hopper 270.

### CONTROL SYSTEM AND OPERATION

Fig. 11 shows in block diagram form the elements of a control system for the present invention. At the heart of the control system is a digital data processing means 300 (preferably a Zylog Super 8-8K microprocessor) that is programmed to receive various input signals and issue control signals as described next.

When the system of the present invention is turned on, the data processing means 300 first issues a signal to gear motor 40 to retract arm 41 to allow spring 36 to raise table 30 against the pick roller 104. The empty stack sensor 52 is polled to see if the table 30 is empty. If so, the system enters a wait state, which it makes known with a message on display 57. If sheets are present on the table 30, then an operator-initiated picking command can be issued by data processing means 300. This causes a control signal to issue to the clutch 109 for the pick roller 104. Engagement of the clutch 109 causes the pick roller 104 to turn counterclockwise (as seen in Fig. 1). This results in sheet 22 being drawn into contact with dam means 70, which guides the edge of sheet 22 into the retard gap between retard means 80 and the surface 106 above it.

If only a single sheet is present, the lesser frictional force on the sheet surface contacted by retard means 80 is overcome by the greater frictional force applied by the pick roller 104 and the sheet 22 is driven past the retard means 80. If more than one sheet is present, then the frictional force from retard means 80 is usually enough to separate the extra sheets from the top sheet 22. The sheet (or sheets, if the retard means 80 has not succeeded) will proceed toward and be grasped by roller pair 120a, 122a and driven into the measuring gap between base surface 180 and measuring finger 153. This results in a voltage signal being issued from the Hall effect chip 162 of thickness sensor assembly 150 to the data processing means 300. This voltage signal is indicative of the thickness sensed. Depending on the sheet thickness expected (which can be established by programming or a calibration run of a single sample sheet), the data processing means will let sheet transport continue or register a multiple sheet condition. This causes the action of the transport rollers to be inhibited, by a signal sent to the drive motor 18 and the error condition is registered on display 57.

Once the thickness sensor assembly 150 has allowed the sheet 22 to progress, it is grasped by roller pair 120b, 122b and driven toward skew photosensors 60, 62. If photosensor 62 senses a sheet and photosensor 60 senses no sheet, a skew condition is present that has not been corrected by the angled rollers. Because a skewed sheet can lead to inaccurate reading, an error condition is noted, an error message registered on display 57 and drive motor 18 is inhibited. If neither sensor 60 nor sensor 62 detects a sheet when expected (time out condition), a jam may have occurred. Again, an error message will be registered on display 57.

The pick roller 104 remains powered until the leading edge of sheet 22 has just passed the roller pair 120b, 122b. At this position, the power to the clutch 109 is turned off and the sheet 22 is moved downstream by the rollers 120a, 122a and 120b, 122b. As the picked sheet 22 proceeds, it will also turn the pick wheel 104, because the latter is now freewheeling. As the trailing edge of the picked sheet 22 falls over the leading edge of the sheet 21 next below it, the new leading edge (of the formerly next-to-top sheet) is exposed to the action of the still rotating pick roller 104. The sheet 21 will follow the trailing edge of sheet 22 with only a small gap between them, but it will follow only as long as the pick roller 104 is rotated. When the trailing edge of the picked sheet 22 loses contact with the pick roller 104 as it exits the retard gap, the leading edge of the sheet 21 will just be at the entry to the retard gap. Thus, it will be seen that the retard means 80 in a normal, successful pick plays an important role in a pre-pick cycle. The retard means 80 helps keep the pick roller 104 rolling while freewheeling but allows the sheet 21 to advance only to the point where it just enters the retard gap. When the next pick cycle starts the sheet 21 will start up from this position.

If a single sheet 22 is present at the thickness sensor assembly 150 and not skewed, it is driven into processing station 200 where optical reading occurs. Upper and lower optical reading assemblies 210, 220 register reflected light or the presence of marks and communicate sensed data via their local data processing means 310, 320 (preferably Zylog Super 8-8K microprocessors) to the data processing means 300, which may process this data in some fashion, as by comparing data to an answer key and developing a score and/or by summing data to develop certain totals. After passing through optical processing station 200, the sheet 22 is transported by roller pairs 130a, 132a, 130b, 132b, 130c, 132c to print station 250, where a score, a total or other data may be printed on the sheet 22 under control of the data processing means 300. After passing the print station 250, the rollers 260a, 260b, 262a, 262b grasp the sheet and propel it into the discharge hopper 270.

It will be seen by those skilled in the art that various changes may be made. For example, it will be clear that the invention could be implemented with other forms of pick means having different arcuate surfaces and that other means of supporting the sheet stack 20 for lifting into contact with the pick means could be utilized. In addition, it will be seen that other forms of the guide and retard assembly 90 could be used, such as dam means or retard means with a slightly different surface shape or orientation, as long as a retard gap is formed.

## Claims

1. An apparatus for removing a single sheet (22) from the top of a stack of sheets (20) and transporting it laterally in the direction of a processing station (200), said apparatus having
pick means (100) with an arcuate contact surface (106) for frictionally engaging the top sheet (22) and transporting it laterally,
stack support means (30) located adjacent but spaced from the arcuate contact surface (106) for supporting the stack of sheets (20) relative to the arcuate contact surface (106), with the leading edges of the sheets substantially aligned in a sheet edge plane, and
dam means (70) located adjacent but spaced from the arcuate contact surface (106)
characterized in that,
the arcuate contact surface (106) contacts an exposed edge of the sheet (22) on top of the stack (20) and portions of the arcuate contact surface (106) that are adjacent the exposed edge extend both above and below the plane of the top of the stack (20), whereby the arcuate contact surface (106) engages the top sheet (22) with a static force that has a first downward component parallel to the sheet edge plane and substantially only in the sheet edge plane and has a second, lateral component perpendicular to the sheet edge plane and opposite to the direction of transport; and the dam means (70) is located below the plane of the top of the stack (20) and slidingly engages the sheet edge and the sheet surface opposite the surface engaged by the arcuate contact surface (106) to guide the sheet edge after its removal from the sheet edge plane.

2. The apparatus as recited in claim 1, wherein the arcuate contact surface (106) is a pick roller (104) having an axis of rotation (107) and an cylindrical surface (106) for frictionally engaging an exposed edge of a sheet (22) on the top of the stack (20).

3. The apparatus recited in claim 1 wherein the dam means (70) guides the sheet edge back toward the arcuate contact surface (106).

4. The apparatus recited in claim 3 further comprising retard means (80) for receiving the edge of sheets (22) guided by the dam means (70) and for pinching the sheets (22) between the retard means (80) and the arcuate contact surface (106).

5. The apparatus recited in claim 3 further comprising retard means (80) mounted downstream from the dam means (70) for receiving the edge of sheets (22) guided by the dam means (70) and for pinching the sheets (22) between the retard means (80) and the arcuate contact surface (106).

6. The apparatus recited in claim 1 wherein said pick means (100) for frictionally engaging the exposed surface of the top sheet (22) is a rotating roller (104).

7. The apparatus as recited in claim 6 wherein said rotating roller (104) is mounted for selective rotation while in contact with the exposed edge of the top of a stack of sheets (20) in response to a pick command from a data processing means (300).

8. The apparatus recited in claim 5 wherein the retard means (80) comprises a substantially flat friction pad (80) of material having a lower coefficient of friction than the arcuate contact surface (106).

9. The apparatus recited in claim 5 further comprising a thickness sensor means (160) downstream from said retard means (80) for sensing the thickness of sheets (22) that are transported past said retard means (80).

10. The apparatus as recited in claim 9 further comprising error indicator means (162) responsive to said thickness sensor means (160) for signalling an error condition if more than one sheet (22) is transported past said retard means (80).

11. The apparatus as recited in claim 9 further comprising skew detection means (60, 62) downstream from said thickness sensor means (160).

12. The apparatus as recited in claim 9 further comprising means (162, 300) responsive to said thickness sensor means (160) for inhibiting motion of said pick means (100) if more than one sheet (22) is transported past said retard means (80).

13. The apparatus as recited in claim 5 further comprising means (52) for sensing the presence or absence of a stack of sheets (20).

14. The apparatus as recited in claim 5 wherein said retard means (80) is a substantially flat friction pad (80) spring-biased to remain in a position of substantial tangential engagement with the arcuate contact surface (106) of the pick means (100) just downstream from the dam means (70).

15. The apparatus as recited in claim 14 wherein the retard means (80) is spring biased against the arcuate contact surface (106) with a force of about 140 grams.

16. The apparatus as recited in claim 9 wherein said thickness sensor means (160) comprises:
a base surface (180);
a movable arm (152) having a contact tip (153) adjacent the base surface (180), said contact tip (153) and base surface (180) together defining a measuring gap;
mounting means (151) for mounting the movable arm (152) for displacement when one or more sheets (22) enters the measuring gap; and
means (162) responsive to displacement of said movable arm (152) for registering as an electrical signal the amount of deflection of said movable arm (152).

17. The apparatus as recited in claim 16 wherein said mounting means (151) comprises a flex hinge mechanism (156) that permits the arm (152) to rotate in a single plane substantially vertical to the plane of sheets (22) in the measuring gap but otherwise constrains movement of the arm (152).

18. The apparatus as recited in claim 16 wherein a portion of the arm (152) moves in a gap between a magnet (160) and a Hall effect sensor (162) to produce from said Hall effect sensor (162) a voltage dependent on the location of the arm (152) in the gap between said magnet (160) and said Hall effect sensor (162).

19. The apparatus as recited in claim 5 further comprising lift means (35, 36, 38) operably connected to said stack support means (30) for urging said stack support means (30) against the pick means (100) so that the top of said stack (20) engages said pick means (100) with a force of substantially constant magnitude regardless of stack height.

20. The apparatus as recited in claim 19 wherein said force exerted by said lift means (35, 36, 38) against the pick means (100) is approximately 250 grams.

21. The apparatus as recited in claim 19 wherein the stack support means (30) comprises a tray (30) mounted to rotate on an axis (32) near an edge of the tray (30) and the lift means (35, 36, 38) comprises a bias spring (36) of a selected spring rate connected to said tray (30) that rotates the tray (30) on its axis (32) and determines the force exerted against said pick means (100) by the top of the stack (20).

22. A method for removing a single sheet (22) from the top of a stack of sheets (20) and transporting it laterally in the direction of a processing station (200), in an apparatus having
pick means (100) with an arcuate contact surface (106) for frictionally engaging the top sheet (22) and transporting it laterally,
stack support means (30) located adjacent but spaced from the arcuate contact surface (106) for supporting the stack of sheets (20) relative to the arcuate contact surface (106), with the leading edges of the sheets substantially aligned in a sheet edge plane, and
dam means (70) located adjacent but spaced from the arcuate contact surface (106)
characterized by,
positioning the arcuate contact surface (106) to contact an exposed edge of the sheet (22) on top of the stack (20) with portions of the arcuate contact surface (106) that are adjacent the exposed edge extending both above and below the plane of the top of the stack (20) and whereby the arcuate contact surface (106) exerts on the top sheet (22) a static force that has a first downward component parallel to the sheet edge plane and substantially only in the sheet edge plane and has a second, lateral component perpendicular to the sheet edge plane and opposite to the direction of transport; and
locating the dam means (70) below the plane of the top of the stack (20) to slidingly engage the sheet edge and the sheet surface opposite the surface engaged by the arcuate contact surface (106) to guide the sheet edge after its removal from the sheet edge plane.

## Patentansprüche

1. Vorrichtung zum Entfernen eines einzelnen Blattes (22) vom oberen Ende eines Blätterstapels (20) und zu dessen Transport seitlich in Richtung einer Verarbeitungsstation (200), mit
einer Greifeinrichtung (100) mit einer gekrümmten Kontaktfläche (106) zur reibungsbehafteten Erfassung des obersten Blattes (22) und dessen Transport in seitlicher Richtung,
einer Stapel-Stützeinrichtung (30), die benachbart aber beabstandet zur gekrümmten Kontaktfläche (106) zur Stützung des Blätterstapels (20) relativ zur gekrümmten Kontaktfläche (106) angeordnet ist, wobei die Vorderkanten der Blätter im wesentlichen in einer Blattkantenebene liegen, und
einer Schwelleneinrichtung (70), die benachbart aber beabstandet zur gekrümmten Kontaktfläche (106) angeordnet ist,
dadurch gekennzeichnet, daß
die gekrümmte Kontaktfläche (106) eine exponierte Kante des obersten Blattes (22) im Stapel (20) berührt, wobei die der exponierten Kante naheliegenden Bereiche der gekrümmten Kontaktfläche (106) sich sowohl oberhalb als auch unterhalb der Ebene des Stapeloberendes (20) erstrecken, wodurch die gekrümmte Kontaktfläche (106) das oberste Blatt (22) mit einer statischen Kraft erfaßt, die eine erste abwärts gerichtete, parallel zur Blattkantenebene und im wesentlichen nur in der Blattkantenebene liegende Komponente, sowie eine seitliche, senkrecht zur Blattkantenebene und entgegengesetzt zur Transportrichtung gerichtete zweite Komponente aufweist; und die Schwelleneinrichtung (70) unter der Ebene des Stapeloberendes (20) angeordnet ist und gleitend die Blattkante und die Blattfläche, die der von der gekrümmten Kontaktfläche (6) erfaßten Fläche gegenüberliegt, erfaßt, um die Blattkante nach deren Entfernen aus der Blattkantenebene zu führen.

2. Vorrichtung nach Anspruch 1, wobei die gekrümmte Kontaktfläche (106) eine Greifrolle (104) ist, die eine Drehachse (107) sowie eine Zylinderfläche (106) zur reibungsbehafteten Erfassung einer exponierten Kante eines Blattes (22) auf dem Oberende des Stapels (20) aufweist.

3. Vorrichtung nach Anspruch 1, wobei die Schwelleneinrichtung (70) die Blattkante in Richtung der gekrümmten Kontaktfläche (6) zurückführt.

4. Vorrichtung nach Anspruch 3, ferner umfassend eine Hemmeinrichtung (80) zur Aufnahme der von der Schwelleneinrichtung (70) geführten Blattkanten (22) und zum Einklemmen der Blätter (22) zwischen der Hemmeinrichtung (80) und der gekrümmten Kontaktfläche (106).

5. Vorrichtung nach Anspruch 3, ferner umfassend eine in Bewegungsrichtung hinter der Schwelleneinrichtung (70) angeordnete Hemmeinrichtung (80) zur Aufnahme der von der Schwelleneinrichtung (70) geführten Blattkanten (22) und zum Einklemmen der Blätter (22) zwischen der Hemmeinrichtung (80) und der gekrümmten Kontaktfläche (106).

6. Vorrichtung nach Anspruch 1, wobei die Greifeinrichtung (100) zur reibungsbehafteten Erfassung der exponierten Fläche des obersten Blattes (22) eine drehbare Rolle (104) ist.

7. Vorrichtung nach Anspruch 6, wobei die drehbare Rolle (104) zur gezielten Drehung vorgesehen ist, während sie in Reaktion auf einen Greifbefehl von einer Datenverarbeitungseinrichtung (300) mit der exponierten Kante des Stapeloberendes (20) in Kontakt steht.

8. Vorrichtung nach Anspruch 5, wobei die Hemmeinrichtung (80) ein im wesentlichen flaches Reibkissen (80) aus einem Material umfaßt, das einen niedrigeren Reibungskoeffizienten als die gekrümmte Kontaktfläche (106) aufweist.

9. Vorrichtung nach Anspruch 5, ferner umfassend eine Dickenerfassungseinrichtung (160), die in Bewegungsrichtung hinter der Hemmeinrichtung (80) zur Erfassung der Dicke der an der Hemmeinrichtung (80) vorbeitransportierten Blätter (22) vorgesehen ist.

10. Vorrichtung nach Anspruch 9, ferner umfassend eine Fehleranzeigeeinrichtung (162), die auf die Dickenerfassungseinrichtung (160) anspricht, um einen Fehlzustand anzuzeigen, wenn mehr als ein Blatt (22) an der Hemmeinrichtung (80) vorbeitransportiert wird.

11. Vorrichtung nach Anspruch 9, ferner umfassend eine Schrägstellungs-Erfassungseinrichtung (60, 62) hinter der Dickenerfassungseinrichtung (160).

12. Vorrichtung nach Anspruch 9, ferner umfassend Einrichtungen (162 300), die auf die Dickenerfassungseinrichtung (160) ansprechen, um die Bewegung der Greifeinrichtung (100) zu unterbinden, wenn mehr als ein Blatt (22) an der Hemmeinrichtung (80) vorbeitransportiert wird.

13. Vorrichtung nach Anspruch 5, ferner umfassend eine Einrichtung (52) zur Erfassung, ob ein Blätterstapel (20) vorhanden ist oder nicht.

14. Vorrichtung nach Anspruch 5, wobei die Hemmeinrichtung (80) ein im wesentlichen flaches Reibkissen (80) ist, das federgespannt ist, um eine Position eines im wesentlichen tangentialen Eingriffs mit der gekrümmten Kontaktfläche (106) der Greifeinrichtung (100) unmittelbar hinter der Schwelleneinrichtung (70) beizubehalten.

15. Vorrichtung nach Anspruch 14, wobei die Hemmeinrichtung (80) mit einer Kraft von etwa 140 g gegen die gekrümmte Kontaktfläche (106) federgespannt ist.

16. Vorrichtung nach Anspruch 9, wobei die Dickenerfassungseinrichtung (160):
eine Grundfläche (180);
einen beweglichen Arm (152), der eine Kontaktspitze (153) nahe der Grundfläche (180) aufweist, wobei die Kontaktspitze (153) und die Grundfläche (180) zusammen einen Meßspalt bilden;
eine Halteeinrichtung (151) zum Halten des beweglichen Arms (152), um diesen zu versetzen, wenn ein oder mehrere Blätter (22) in den Meßspalt eintreten; und
eine Einrichtung (162) umfaßt, die auf einen Versatz des beweglichen Arms (152) anspricht, um den Ablenkungswert des beweglichen Arms (152) als ein elektrisches Signal zu erfassen.

17. Vorrichtung nach Anspruch 16, wobei die Halteeinrichtung (151) einen Biegegelenkmechanismus (156) umfaßt, der eine Drehung des Arms (152) in einer einzigen, im wesentlichen senkrecht zur Blattebene (22) im Meßspalt liegenden Ebene zuläßt, jedoch sonstige Bewegungen des Armes (152) verhindert.

18. Vorrichtung nach Anspruch 16, wobei sich ein Abschnitt des Arms (152) in einem Spalt zwischen einem Magneten (160) und einen Hall-Effektsensor (162) bewegt, um mittels des Hall-Effektsensors (162) eine Spannung zu erzeugen, die von der Position des Arms (152) im Spalt zwischen dem Magneten (160) und dem Halleffekt-Sensor (162) abhängt.

19. Vorrichtung nach Anspruch 5, ferner umfassend Hebeeinrichtungen (35, 36, 38), die mit der Stapel-Stützeinrichtung (30) wirkverbunden sind, um die Stapel-Stützeinrichtung (30) gegen die Greifeinrichtung (100) zu drücken, so daß das obere Ende des Stapels (20) mit der Greifeinrichtung (100) mit einer Kraft im Eingriff steht; die unabhängig von der Stapelhöhe im wesentlichen konstant ist.

20. Vorrichtung nach Anspruch 19, wobei die von den Hebeeinrichtungen (35, 36, 38) gegen die Greifeinrichtung (100) ausgeübte Kraft etwa 250 g beträgt.

21. Vorrichtung nach Anspruch 19, wobei die Stapel-Stützeinrichtung (30) eine Ablage (30), die drehbar an einer Achse (32) in der Nähe einer Kante der Ablage (30) gehalten ist, sowie Hebeeinrichtungen (35, 36, 38) umfaßt, die eine Spannfeder (36) mit einer bestimmten Federkonstante aufweist, welche mit der Ablage (30) verbunden ist und diese um ihre Achse (32) dreht sowie die Kraft bestimmt, die vom oberen Ende des Stapels (20) gegen die Greifeinrichtung (100) ausgeübt wird.

22. Verfahren zur Entfernung eines einzelnen Blattes (22) vom oberen Ende eines Blätterstapels (20) und zu dessen Transport seitlich in die Richtung einer Verarbeitungsstation (200), bei der die Vorrichtung
eine Greifeinrichtung (100) mit einer gekrümmten Kontaktfläche (106) zur reibungsbehafteten Erfassung des obersten Blattes (22) und dessen Transport in seitlicher Richtung,
eine Stapel-Stützeinrichtung (30), die benachbart aber beabstandet zur gekrümmten Kontaktfläche (106) zur Stützung des Blätterstapels (20) relativ zurgekrümmten Kontaktfläche (106) angeordnet ist, wobei die Vorderkanten der Blätter im wesentlichen in einer Blattkantenebene liegen, und
eine Schwelleneinrichtung (70) aufweist, die benachbart aber beabstandet zur gekrümmten Kontaktfläche (106) angeordnet ist,
gekennzeichnet durch
Positionieren der gekrümmten Kontaktfläche (106) zur Berührung einer exponierten Kante des obersten Blattes (22) des Stapels (20), wobei der exponierten Kante naheliegende Bereiche der gekrümmten Kontaktfläche (106) sich sowohl oberhalb als auch unterhalb der Ebene des oberen Endes des Stapels (20) erstrecken und wodurch die gekrümmte Kontaktfläche (106) auf das oberste Blatt (22) eine statische Kraft ausübt, die eine erste, abwärts gerichtete, parallel zur Blattkantenebene und im wesentlichen nur in der Blattkantenebene liegende Komponente, sowie eine seitliche, senkrecht zur Blattkantenebene und entgegen der Transportrichtung gerichtete zweite Komponente aufweist; und
Anordnen der Schwelleneinrichtung (70) unter der Ebene des oberen Stapelendes (20), um die Blattkante und die Blattfläche, die der von der gekrümmten Kontaktfläche (106) erfaßten Fläche gegenüberliegt, gleitend erfaßt, um die Blattkante nach dem Entfernen aus der Blattkantenebene zu führen.

## Revendications

1. Dispositif pour extraire une feuille individuelle (22) du sommet d'une pile de feuilles (20) et la transporter latéralement en direction d'un poste de traitement (200), ledit dispositif possédant
des moyens de prélèvement (100) présentant une surface de contact arquée (106) pour venir en contact de friction avec la feuille supérieure (22) et la transporter latéralement,
des moyens (30) formant support de la pile situés adjacents, mais espacés de la surface de contact arquée (106) pour supporter la pile de feuilles (20) par rapport à la surface de contact arquée (106), les bords antérieurs des feuilles étant sensiblement alignés dans un plan de bord de feuille, et
des moyens de retenue (70) situés adjacents, mais espacés de la surface de contact arquée (106)
caractérisé en ce que
la surface de contact arquée (106) se trouve en contact avec un bord exposé de la feuille (22) sur le sommet de la pile (20) et des parties de la surface de contact arquée (106) qui sont adjacentes au bord exposé s'étendent à la fois au-dessus et au-dessous du plan du sommet de la pile (20), de telle sorte que la surface de contact arquée (106) se trouve en contact avec la feuille supérieure (22) avec une force statique qui possède une première composante descendante parallèle au plan de bord de la feuille et sensiblement uniquement dans le plan de bord de la feuille et possède une seconde composante latérale perpendiculaire au plan de bord de la feuille et opposée à la direction du transport ; et les moyens de retenue (70) sont disposés au-dessous du plan du sommet de la pile (20) et se trouvent en contact glissant avec le bord de feuille et avec la surface de la feuille opposée à la surface en contact avec la surface de contact arquée (106) pour guider le bord de feuille après son extraction du plan de bord de feuille.

2. Dispositif selon la revendication 1, dans lequel la surface de contact arquée (106) est un rouleau de prélèvement (104) possédant un axe de rotation (107) et une surface cylindrique (106) pour se trouver en contact de friction avec un bord exposé d'une feuille (22) sur le sommet de la pile (20).

3. Dispositif selon la revendication 1, dans lequel les moyens de retenue (70) guident le bord de la feuille à nouveau vers la surface de contact arquée (106).

4. Dispositif selon la revendication 3, comportant en outre des moyens de retard (80) pour recevoir le bord de feuille (22) guidé par les moyens de retenue (70) et pour pincer les feuilles (22) entre les moyens de retard (80) et la surface de contact arquée (106).

5. Dispositif selon la revendication 3, comportant en outre des moyens de retard (80) disposés en aval des moyens de retenue (70) pour recevoir le bord de feuilles (22) guidé par les moyens de retenue (70) et pour pincer les feuilles (22) entre les moyens de retard (80) et la surface de contact arquée (106).

6. Dispositif selon la revendication 1, dans lequel lesdits moyens de prélèvement (100) pour venir en contact de friction avec la surface exposée de la feuille supérieure (22) sont un rouleau rotatif (104).

7. Dispositif selon la revendication 6, dans lequel ledit rouleau rotatif (104) est monté en vue d'une rotation sélective tout en étant en contact avec le bord exposé du sommet d'une pile de feuille (20) en réponse à une commande de prélèvement provenant de moyens de traitement de données (300).

8. Dispositif selon la revendication 5, dans lequel les moyens de retard (80) comportent un patin de friction (80) sensiblement plan en un matériau ayant un coefficient de friction inférieur à celui de la surface de contact arquée (106).

9. Dispositif selon la revendication 5, comportant en outre un détecteur d'épaisseur (160) en aval desdits moyens de retard (80) pour détecter l'épaisseur de feuilles (22) qui sont transportées au-delà desdits moyens de retard (80).

10. Dispositif selon la revendication 9, comportant en outre un organe indicateur d'erreur (162) sensible audit capteur d'épaisseur (160) pour signaler une condition d'erreur si plus d'une feuille (22) est transportée au-delà desdits moyens de retard (80).

11. Dispositif selon la revendication 9, comportant en outre des moyens de détection de biais (60, 62) en aval dudit capteur d'épaisseur (160).

12. Dispositif selon la revendication 9, comportant en outre des moyens (162, 300) sensibles audit capteur d'épaisseur (160) pour bloquer un déplacement desdits moyens de prélèvement (100) si plus d'une feuille (22) est transportée au-delà desdits moyens de retard (80).

13. Dispositif selon la revendication 5, comportant en outre des moyens (52) pour détecter la présence ou l'absence d'une pile de feuilles (20).

14. Dispositif selon la revendication 5, dans lequel lesdits moyens de retard (80) sont constitués par un patin de frottement sensiblement plan (80) sollicité par ressort pour demeurer dans une position de contact sensiblement tangentiel avec la surface de contact arquée (106) des moyens de prélèvement (100) juste en aval des moyens de retenue (70).

15. Dispositif selon la revendication 14, dans lequel les moyens de retard (80) sont sollicités par ressort contre la surface de contact arquée (106) avec une force d'environ 140g.

16. Dispositif selon la revendication 9, dans lequel ledit capteur d'épaisseur (160) comporte :
une surface de base (180) ;
un bras mobile (152) possédant une extrémité antérieure de contact (153) adjacente à la surface de base (180), ladite extrémité antérieure de contact (153) et la surface de base (180) définissant conjointement un intervalle de mesure ;
des moyens de montage (151) pour supporter le bras mobile (152) en vue d'un déplacement lorsque l'une ou plusieurs feuilles (22) pénètre dans l'intervalle de mesure ; et
des moyens (162) sensibles au déplacement dudit bras mobile (152) pour enregistrer sous la forme d'un signal électrique la grandeur de la déviation dudit bras mobile (152).

17. Dispositif selon la revendication 16, dans lequel lesdits moyens de montage (151) comportent un mécanisme d'articulation flexible (156) permettant au bras (152) de tourner dans un seul plan sensiblement vertical par rapport au plan des feuilles (22) dans l'intervalle de mesure, mais limitant par ailleurs le mouvement du bras (152).

18. Dispositif selon la revendication 16, dans lequel une partie du bras (152) se déplace dans un entrefer entre un aimant (160) et un capteur à effet Hall (162) pour produire à partir dudit capteur à effet Hall (162) une tension fonction de l'emplacement du bras (152) dans l'entrefer entre ledit aimant (160) et ledit capteur à effet Hall (162).

19. Dispositif selon la revendication 5, comportant en outre des moyens élévateurs (35, 36, 38) reliés fonctionnellement auxdits moyens formant support de pile (30) pour pousser lesdits moyens formant support de pile (30) contre les moyens de prélèvement (100) de sorte que le sommet de ladite pile (20) est en contact avec lesdits moyens de prélèvement (100) avec une force d'amplitude sensiblement constante indépendamment de la hauteur de la pile.

20. Dispositif selon la revendication 19, dans lequel ladite force exercée par lesdits moyens élévateurs (35, 36, 38) contre les moyens de prélèvement (100) est d'environ 250g.

21. Dispositif selon la revendication 19, dans lequel les moyens formant support de pile (30) comportent un plateau (30) agencé pour tourner sur un axe (32) près d'un bord du plateau (30) et les moyens élévateurs (35, 36, 38) comportent un ressort de sollicitation (36) de raideur choisie reliée audit plateau (30) qui entraîne le plateau (30) en rotation sur son axe (32) et détermine la force exercée contre lesdits moyens de prélèvement (100) par le sommet de la pile (20).

22. Procédé pour extraire une feuille individuelle (22) du sommet d'une pile de feuilles (20) et la transporter latéralement en direction d'un poste de traitement (200), dans un dispositif possédant
des moyens de prélèvement (100) présentant une surface de contact arquée (106) pour venir en contact de friction avec la feuille supérieure (22) et la transporter latéralement,
des moyens (30) formant support de pile situés adjacents, mais espacés de la surface de la contact arquée (106) pour supporter la pile de feuilles (20) par rapport à la surface de contact arquée (106), les bords antérieurs des feuilles étant sensiblement alignés dans un plan de bord de feuille, et
des moyens de retenue (70) disposés adjacents, mais espacés de la surface de contact arquée (106), caractérisé par les étapes consistant à
positionner la surface de contact arquée (106) en contact avec un bord exposé de la feuille (22) sur le sommet de la pile (20), des parties de la surface de contact arquée (106), adjacentes au bord exposé s'étendant à la fois au-dessus et au-dessous du plan du sommet de la pile (20) et la surface de contact arquée (106) exerçant ainsi sur la feuille supérieure (22) une force statique possédant une première composante descendante parallèle au plan de bord de feuille et sensiblement uniquement dans le plan de bord de feuille et possédant une seconde composante latérale perpendiculaire au plan de bord de feuille et opposée à la direction de transport ; et
disposer les moyens de retenue (70) au-dessous du plan du sommet de la pile (20) pour venir en contact glissant avec le bord de la feuille et de la surface de la feuille opposée à la surface en contact avec la surface de contact arquée (106) pour guider le bord de la feuille après son extraction du plan de bord de la feuille.
